# EUROPEAN PATENT APPLICATION

(11) **EP 3 023 038 A1**
(43) Date of publication of application: **25.05.2016**
(21) Application number: 15194757.9
(22) Date of filing: 16.11.2015
(51) Int. Cl.: A47J 31/44

(54) **MACHINE FOR MAKING MILK-BASED DRINKS**

(30) Priority: 19.11.2014 IT BS20140193
(71) Applicant: Capitani S.r.l., 22070 Solbiate (CO) (IT)
(72) Inventor: CAPITANI, Gionata, I-22070 Solbiate, COMO (IT)
(74) Representative: Eterno, Enrico

(57) **Abstract**

Machine for the production of milk-based drinks comprising a single-portion container (16), removably connected to one (8) of a pair of dispensing areas (8, 10) of said machine, which defines a containment chamber (22) for a secondary liquid, in particular milk, an uptake duct (14), inserted partly into the single-portion container (16) for drawing the secondary liquid, and a transit duct (60, 62, 64) for the infusion liquid, connected to the dispensing area (8) to which the single-portion container (16) is associated and communicating downstream with a primary dispensing nozzle (66).

These ducts (14, 60, 62, 64) communicate with each other in such a way that, through Venturi effect, the passage of the infusion liquid in the transit duct (60, 62, 64) causes suction of the secondary fluid through the uptake duct (14).

## Description

This invention relates to a machine for making and dispensing an infused drink. Specifically, this invention covers a machine capable of producing a plurality of such beverages.

From document WO 2005/102126 A2, a machine is known for the preparation of milk-based drinks.

The main advantage of this system is the possibility of separating the milk tank from the machine, in order to store the residual milk in a refrigerated environment when it is expected that the machine will not be used for a certain time.

However, the system described in the above document is not without defects, as it is not easy to determine the storage time of the milk contained in the separable tank. It follows that, in the absence of a careful monitoring of the expiration dates of the original purchased packages, the milk in the tank could exceed its expiration date.

In addition to this, cleaning the separable tank and related accessories may prove difficult, a fact that could promote the degradation of the contained product.

The purpose of this invention is to provide a machine for dispensing a single serving of a milk-based beverage, and designed to be simple to clean.

This objective is achieved by means of a machine for making milk-based drinks according to claim 1. Additional advantages can be achieved by the preferred features of the dependent claims.

The object of this invention will now be described in detail, with the help of the accompanying drawings, in which:

- Figures 1 and 2 represent two perspective views partly in section, the second with separated parts, of a machine covered by this invention according to a possible embodiment;

- Figure 3 shows a sectional view of the single-portion container shown in Figures 1 (mounted on the machine) and 2 (in exploded view);

- Figure 4 shows the machine of Figure 1 with a partially transparent casing, so as to show the internal functional components of such machine according to a possible embodiment.

With reference to the above figures, reference number 1 identifies, in its entirety, a machine for making a milk-based drink according to the invention.

Preferably, the machine 1 comprises a pair of dispensing areas 8, 10, for example respectively delegated to the outflow of coffee and milk or heated water.

According to a preferred variant, in correspondence of the second dispensing area 10, an infusion group 46 is provided comprising a male infusor and a female infusor, at least one of which movable in relation to the other to open/close an infusion chamber.

According to a preferred embodiment, capsules or pods containing one or more aromatic substances to be infused, preferably coffee are insertable in the foresaid infusion chamber.

The machine 1 comprises a tank 2 to hold an infusion liquid, such as water, heating means 4 and at least one pump 6 to move said liquid from the tank 2 to the pair of dispensing areas 8, 10 making it pass through the heating means 4.

In this way, the infusion liquid is pumped from the tank through the heating means to arrive at the dispensing area with a temperature higher than that of storage in the tank, for example near to its boiling temperature.

According to the variant shown, the heating means 4 comprise an electric heat exchanger.

In order to direct the infusion liquid selectively towards a determined dispensing area 8, 10, the machine 1 comprises deviation means 12, for example at least one solenoid valve.

Optionally, the machine 1 could comprise management and control means 50 functionally connected to the pump 6, the heating means 4 and/or the detection means discussed below.

According to an embodiment, the management and control means 50 could be configured to selectively command the heating means 50 depending on whether the infusion liquid is directed towards the first 8 or towards the second 10 dispensing area.

In this way, the infusion temperatures at the different dispensing areas can be varied depending on the desired drink.

Detachably connected to one of the dispensing areas 8, the machine 1 comprises a single-portion container 16, which delimits a containment chamber 22 for a secondary liquid, preferably milk.

In this description, the term "single-portion container" means a case that defines a maximum inner volume smaller than or equal to 300 millilitres, preferably corresponding to approximately 50-200 millilitres, for example about 80-130 millilitres or about 100 millilitres.

Consequently, the single-portion container 16 is a component removable from the machine, in order, for example, to be subjected to periodic cleaning, or that can be replaced in case of damage.

Preferably, the single-portion container 16 is shape-connectable to the machine 1, in particular by insertion from the top down into an appropriate seat 96.

Advantageously, the single-portion container 16 comprises a level indicator 90, in the specific case disposed in correspondence of a container wall 68 of such a container, for example visible internally or externally.

Preferably, the single-portion container 16 extends substantially vertically, for example, so that its container wall 68 defines a generally tubular containment chamber 22.

For example, the single-portion container 16 can comprise a closure lid 78 suitable to overlap at least partially at one end - for example an axial end - of such a container, and in particular to an upper portion of the container wall 68.

The machine 1 comprises an uptake duct 14, inserted in the single-portion container 16 for drawing the secondary liquid, and a transit duct 60, 62, 64 for the infusion liquid, connected to the dispensing area 8 to which the single-portion container 16 is associated and communicating downstream with a primary dispensing nozzle 66.

According to an advantageous variant, the primary dispensing nozzle 66 is rotatable around an articulation axis S, for example arranged vertically.

According to a further advantageous variant, the primary dispensing nozzle 66 is adjustable in height, which is to say that it is possible to adjust the distance of this nozzle with respect to an underlying cup 80.

According to a still further variant, the primary dispensing nozzle 66 is mounted on the single-portion container 16, and is preferably removable from the latter (for example, to perform maintenance or cleaning).

According to an embodiment, the second dispensing area 10 terminates with a secondary dispensing nozzle 92. This a nozzle is arranged downstream of the infusion group 46 (according to the direction of transit of the infusion liquid), according to certain embodiments.

Advantageously, the distance between the primary dispensing nozzle 66 and the secondary dispensing nozzle 92 is in the range 10-66 millimetres, preferably 20-50 millimetres.

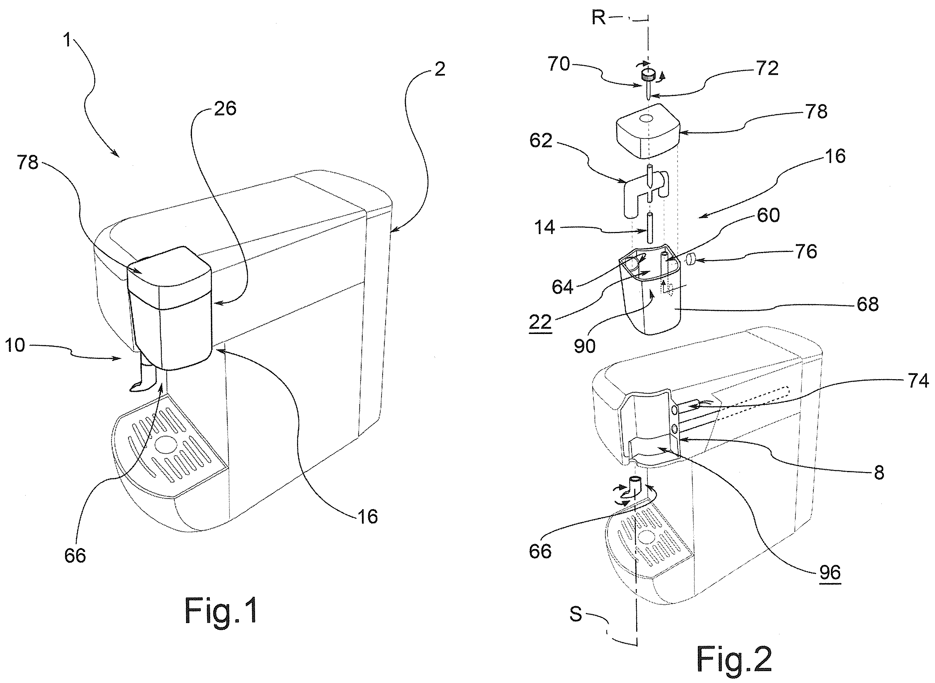

According to a further variant, a duct section 64 of the transit duct develops around an axis of development (drawn in broken lines in Figure 2), the distance between the primary dispensing nozzle 66 and the axis of development being in the range of 10-66 mm, preferably 20-50 millimetres. Preferably, the primary dispensing nozzle 66 is fitted to this duct section 64.

The above-mentioned ducts 14, 60, 62, 64 communicate with each other in such a way that, through Venturi effect, passage of the infusion liquid in the transit duct 60, 62, 64 causes suction of the secondary fluid through the uptake duct 14.

In this way, the secondary liquid is drawn and heated by the infusion liquid, before dispensing in the cup 80.

Indeed, according a variant, the transit duct 60, 62, 64 comprises a narrowing of its cross-section, at which the uptake duct 14 is inserted.

According to a variant of particular advantage, at least one duct section 60, 64 of the transit duct is made in one piece with a container wall 68 of the single-portion container 16.

Preferably, the machine 1 comprises a pair of duct sections 60, 64, arranged substantially vertically, joined to each other by means of a removable fitting 62 which acts as a fluidic bridge between said duct sections 60, 64.

Advantageously, one or both duct sections 60, 64 are open at a certain height from a bottom wall 94 of the infusion container and, more precisely, at a higher level with respect to the pre-set level of the secondary liquid in the single-portion container.

According to a preferred variant, one or both duct sections 60, 64 are sealingly joined in correspondence of openings for the inlet of the infusion liquid in the containment chamber 22 and/or for the outflow of the secondary liquid-infusion liquid mixture from such chamber 22.

According to different variants, the inlet opening is formed on the container wall 68, in correspondence of the bottom wall, while, according to a further variant, the outlet opening is formed in the aforesaid bottom wall.

For example, the removable fitting 62 is generally "U"-shaped.

Therefore, after removing the removable fitting 62, the duct sections 60, 64 - preferably of relatively wide section - are open facing the side of the upper access opening of the single-portion container.

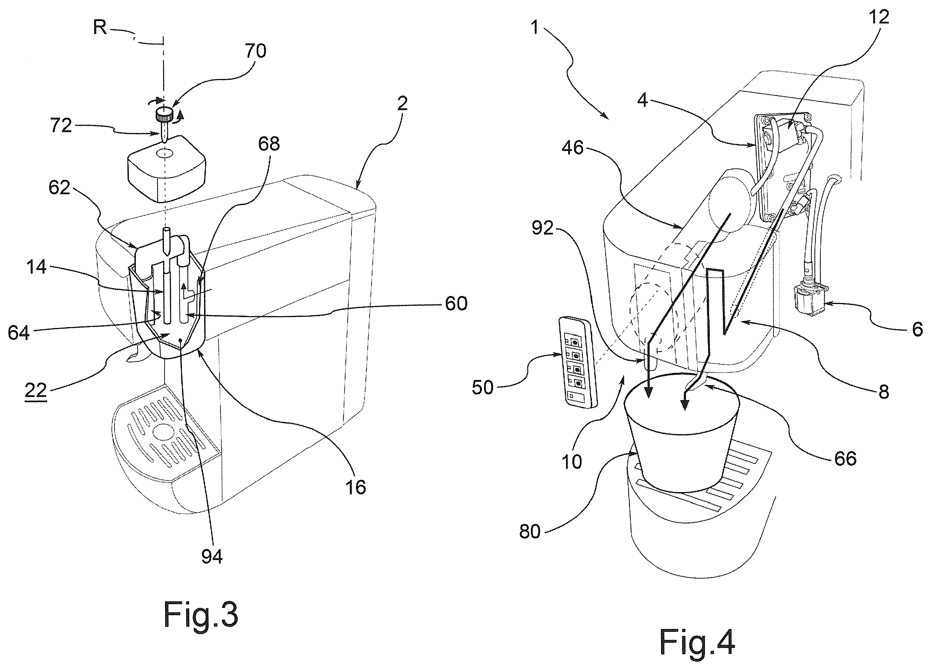

The machine 1 preferably comprises an adjustment member 70 of the flow rate of the secondary liquid through the transit duct 62, 64. Advantageously, as for example schematically shown in the variants of Figure 2 or 3, this member is rotatable around a rotation axis R and comprises a cam obturator 72 suitable for being reversibly superposed at an outlet of the uptake duct 14 in the transit duct 62.

For example, orthogonally to the rotation axis R, the cam obturator 72 has a roughly elliptical or ovoid cross-section.

According to a preferred variant, the machine 1 comprises detection means of the connection of the single-portion container 16 to the machine 1, said means comprising at least one reed switch, namely a foil sensor 74 activated by a magnet 76.

As schematically depicted in Figure 2, the foil sensor could be placed in correspondence of the machine 1, while the magnet 76 at the single-portion container.

Preferably, the foil sensor 74 is disposed vertically above with respect to the first dispensing area 8.

Therefore, advantageously, when the single-portion container 16 is disconnected from the machine 1, the management and control means 50 are configured to interface with the detection means, with the pump 6 and/or with the deviation means 12 so that the infusion liquid is prevented from exiting from the dispensing area 8 to which the single-portion container 16 is associated.

According to an advantageous variant, the detection means may carry out on their own a function of adjusting the pump 6 and/or of the heating means 4 even in the absence of the management and control means.

More precisely, the magnet 76 associated with the single-portion container may be specific for a given beverage to be dispensed (for example, tea or milk), and might interface with the foil sensor 74 in a unique way.

In this way, a single-portion container for milk would be recognised as such by the foil sensor, and could command the pump and/or heating means in a specific way for the secondary liquid.

Advantageously, the single-portion container 16 forms a portion of the outer casing 26 of said machine 1, and is accessible frontally and/or laterally with respect to the latter.

Innovatively, the machine covered by this invention allows, through the techniques described above, solving the drawbacks of the known art.

In particular, this machine allows easy cleaning operations and requires no special care to avoid exceeding the expiration time of the milk, since the milk contained is used up at each dispensing of beverage.

Advantageously, such a machine comprises a single-portion container made in the form of a connectable and removable accessory and, thus, readily separable from the machine as needed.

Advantageously, the machine covered by this invention is easy to use because the dispensing operations are continuously controlled; moreover, the user interface the simple and intuitive adjustment of process parameters.

Advantageously, the integration of the single-portion container in the casing allows both an aesthetic advantage and, especially, a significant reduction of overall dimensions - for example lateral - of the machine. Even the monobloc construction of ducts described was carried out with a view to optimising spaces.

Advantageously, the machine as described allows doing away with volumetric detection means that, in addition to being an additional item in the overall cost of the machine, run the risk of unavoidable failures.

To the forms of embodiment of the machine described above, a skilled person may make modifications, adaptations and replacements of members with others functionally equivalent to satisfy contingent requirements, without departing from the scope of the following claims. Each of the characteristics described as belonging to a possible form of embodiment can be achieved independently from the other embodiments described.

## Claims

1. Machine (1) for making milk-based drinks comprising:
- a tank (2) to hold an infusion liquid, such as water, heating means (4) and at least one pump (6) to move said liquid from the tank (2) to a pair of dispensing areas (8, 10) making it pass through the heating means (4);
- deviation means (12) to selectively direct the infusion liquid towards a given dispensing area (8; 10);
- a single-portion container (16), detachably connected to one of the dispensing areas (8), which delimits a containment chamber (22) for a secondary liquid, such as milk;
- an uptake duct (14), partially inserted in the single-portion container (16) to withdraw the secondary liquid;
- a transit duct (60, 62, 64) for the infusion liquid, connected to the dispensing area (8) to which the single-portion container (16) is associated and communicating downstream with a primary dispensing nozzle (66); wherein said ducts (14, 60, 62, 64) communicate with each other in such a way that, through Venturi effect, passage of the infusion liquid in the transit duct (60, 62, 64) causes suction of the secondary fluid through the uptake duct (14).

2. Machine according to claim 1, wherein the transit duct (60, 62, 64) comprises a narrowing of its cross-section, at which the uptake duct (14) is inserted.

3. Machine according to claim 1 or 2, wherein at least one duct section (60, 64) of the transit duct is made in one piece with a container wall (68) of the single-portion container (16).

4. Machine according to the previous claim, comprising a pair of duct sections (60, 64), arranged substantially vertically, joined to each other by means of a removable fitting (62) which acts as a fluidic bridge between said duct sections (60, 64).

5. Machine according to any of the previous claims, comprising an adjustment member (70) of the flow of secondary fluid through the transit duct (62, 64), said member being rotatable around a rotation axis (R) and comprising a cam obturator (72) suitable for being reversibly superposed at an outlet of the uptake duct (14) in the transit duct (62).

6. Machine according to the previous claim, wherein, orthogonally to the rotation axis (R), the cam obturator (72) has a roughly elliptical or ovoid cross-section.

7. Machine according to any of the previous claims, comprising connection detection means of the single-portion container (16) to the machine (1), said means comprising at least a foil sensor (74) activated by a magnet (76).

8. Machine according to the previous claim, comprising control means (50) configured to:
a) interface with the detection means, with the pump (6) and/or with the deviation means (12) so that, when the single-portion container (16) is disconnected from the machine (1), the infusion fluid is prevented from escaping from the dispensing area (8) to which the single-portion container (16) is associated; and
b) optionally to selectively control the heating means (4) depending on whether the infusion fluid is directed towards a first (8) or towards a second (10) dispensing area.

9. Machine according to any of the previous claims, wherein the single-portion container (16) defines a maximum inner volume smaller than or equal to 300 millilitres, preferably corresponding to approximately 50-200 millilitres, for example about 100 millilitres.

10. Machine according to any of the previous claims, wherein the single-portion container (16) forms a portion of the outer casing (26) of said machine (1), and is accessible frontally and/or laterally with respect to the latter.

11. Machine according to any of the previous claims, wherein an infusion group (46) is provided for at the second dispensing area (10) comprising a male infusor and a female infusor, at least one of which movable in relation to the other to open/close an infusion chamber, capsules or pods containing one or more aromatic substances being insertable in said chamber.

12. Machine according to any of the previous claims, wherein the second dispensing area (10) ends with a secondary dispensing nozzle (92), the distance between the primary dispensing nozzle (66) and said secondary nozzle (92) being between 10-66 mm.

13. Machine according to any of the previous claims, wherein the second dispensing area (10) ends with a secondary dispensing nozzle (92), a duct section (64) of the transit duct extending around an extension axis, the distance between the primary dispensing nozzle (66) and said extension axis being in the range 10-66 mm.
